# DEMANDE DE BREVET EUROPEEN

(11) **EP 4 040 005 A1**
(43) Date de publication de la demande: **10.08.2022**
(21) Numéro de dépôt: 22155951.1
(22) Date de dépôt: 09.02.2022
(51) Int. Cl.: F16F 1/38, F16F 7/108, F16F 13/10

(54) **SUPPORT ANTIVIBRATOIRE ET VEHICULE COMPORTANT UN TEL SUPPORT ANTIVIBRATOIRE**

(30) Priorité: 09.02.2021 FR 2101209
(71) Demandeur: HUTCHINSON, 75008 Paris (FR)
(72) Inventeur: BRISTOT, Pierre, 37510 BALLAN-MIRÉ (FR); AAZIZOU, Khalid, 28200 LA CHAPELLE DU NOYER (FR); MEUNIER, David, 28200 CHATEAUDUN (FR)
(74) Mandataire: Plasseraud IP

(57) **Abrégé**

Support antivibratoire (1) comportant une première armature (2), une deuxième armature (3), un corps principal (4) en élastomère reliant la première armature et la deuxième armature, le corps principal en élastomère permettant des débattements relatifs de la deuxième armature par rapport à la première armature selon une première direction de vibration (Z) et selon une deuxième direction de vibration (X) perpendiculaire à la première direction de vibration, le corps principal en élastomère étant également adapté pour supporter un poids selon la première direction de vibration (Z). Un corps d'inertie (15) est relié à la première armature par une suspension élastique (19) interposée entre le corps d'inertie et la première armature selon la deuxième direction de vibration. Un corps de butée latéral (20) en élastomère est interposé entre la première armature et le corps d'inertie pour limiter les débattements relatifs de la deuxième armature par rapport à la première armature selon la deuxième direction de vibration. Le corps d'inertie a une fréquence propre inférieure à 800 Hz.

## Description

### Domaine technique

La présente description est relative aux supports antivibratoires et aux véhicules comportant de tels supports antivibratoires.

### Technique antérieure

Le document WO2008152284A1 décrit un exemple d'un tel dispositif antivibratoire.

### Résumé

La présente description a notamment pour but de proposer un support antivibratoire permettant un filtrage des fréquences vibratoires élevées, notamment pour le support de moteurs électriques de véhicules ou de blocs moteurs mixtes de véhicules comportant un moteur à combustion interne et un moteur électrique.

A cet effet, la présente description propose un support antivibratoire adapté pour filtrer et amortir des vibrations entre un premier élément et un deuxième élément, ledit support antivibratoire comportant :
- une première armature adaptée pour être fixée au premier élément,
- une deuxième armature adaptée pour être fixée au deuxième élément,
- un corps principal en élastomère reliant la première armature et la deuxième armature, le corps en élastomère permettant des débattements relatifs de la deuxième armature par rapport à la première armature au moins selon une première direction de vibration et selon une deuxième direction de vibration perpendiculaire à la première direction de vibration, le corps principal en élastomère étant également adapté pour supporter un poids du deuxième élément selon la première direction de vibration, le premier élément étant une caisse ou un châssis de véhicule et le deuxième élément étant un bloc motopropulseur du véhicule,
- au moins un corps d'inertie relié à la première armature par une suspension élastique interposée entre ledit corps d'inertie et ladite première armature selon la deuxième direction de vibration,
- au moins un corps de butée latéral en élastomère adapté pour limiter les débattements relatifs de la deuxième armature par rapport à la première armature selon la deuxième direction de vibration,
dans lequel le corps d'inertie a une fréquence propre inférieure à 800 Hz pour les vibrations selon la deuxième direction de vibration.

Grâce à ces dispositions, on assure un filtrage des vibrations de haute fréquence (plus précisément, un filtrage des vibrations de fréquences supérieures à ladite fréquence propre), notamment selon la deuxième direction de vibration.

Cet effet est atteint sans entraîner un encombrement plus important du support antivibratoire et sans dégrader son endurance (la suspension élastique du corps d'inertie travaille essentiellement en compression entre le corps d'inertie et la première armature vis-à-vis des vibrations orientées selon la deuxième direction de vibration).

Dans divers modes de réalisation de l'articulation antivibratoire, on peut éventuellement avoir recours en outre à l'une et/ou à l'autre des dispositions suivantes (seules ou dans toutes leurs combinaisons mutuelles) :
- ledit corps principal en élastomère présente une forme extérieure de cône ayant un sommet surmoulé sur la deuxième armature et une base élargie surmoulée sur une embase rigide qui est fixée rigidement soit à la première armature, soit au corps d'inertie ;
- ledit corps d'inertie a une fréquence propre comprise entre 200 et 700 Hz selon la deuxième direction de vibration ;
- ledit corps d'inertie est en métal ;
- ledit corps de butée latéral est solidaire de la deuxième armature ;
- ledit corps de butée latéral est solidaire au moins du corps d'inertie ;
- ledit corps de butée latéral est solidaire de la première armature et du corps d'inertie, la deuxième armature étant adaptée pour buter contre ledit corps de butée latéral en sollicitant le corps d'inertie selon la deuxième direction de vibration;
- ledit corps principal en élastomère est solidaire d'une embase rigide qui est fixée rigidement à la première armature ;
- ledit corps principal en élastomère est solidaire d'une embase rigide qui est fixée rigidement au corps d'inertie (dans ce cas, l'embase rigide est reliée à la première armature via le corps d'inertie et la suspension élastique) ;
- ladite suspension élastique comporte une cale latérale en élastomère fixée audit corps d'inertie et à ladite première armature, cette cale latérale en élastomère étant disposée pour travailler en cisaillement sous l'effet des vibrations selon la première direction de vibration et en compression sous l'effet des vibrations selon la deuxième direction de vibration ;
- ledit corps d'inertie comporte deux ailes qui sont perpendiculaires à la deuxième direction de vibration et qui sont reliées entre elles par une âme, ladite première armature comporte deux parois latérales en regard respectivement des deux ailes du corps d'inertie, ladite suspension élastique comporte deux cales latérales en élastomère interposées chacune entre une des ailes du corps d'inertie et une paroi latérale de la première armature, chaque cale latérale en élastomère étant disposée pour travailler en cisaillement sous l'effet des vibrations selon la première direction de vibration et en compression sous l'effet des vibrations selon la deuxième direction de vibration, et le support antivibratoire comporte deux corps de butée latéraux en élastomère adaptés pour limiter les débattements de la deuxième armature dans deux sens opposés par butée contre les ailes du corps d'inertie selon la deuxième direction de vibration ;
- ladite âme du corps d'inertie s'étend sensiblement perpendiculairement à la première direction de vibration en recouvrant le corps principal en élastomère et la deuxième armature, la première armature comporte en outre une paroi de couverture recouvrant ladite âme, et le support antivibratoire comportant en outre une cale supérieure en élastomère qui relie l'âme du corps d'inertie et la paroi de couverture de la première armature et qui est disposée pour travailler en cisaillement sous l'effet des vibrations selon la deuxième direction de vibration et en compression sous l'effet des vibrations selon la première direction de vibration, un corps de butée supérieur en élastomère étant interposé entre la deuxième armature et l'âme du corps d'inertie, , et lesdits deux corps de butée latéraux en élastomère étant interposés respectivement entre la deuxième armature et une des ailes du corps d'inertie ;
- ledit corps de butée supérieur est solidaire de la deuxième armature ;
- ledit corps de butée supérieur est solidaire du corps d'inertie ;
- le support antivibratoire comporte deux corps d'inertie qui sont perpendiculaires à la deuxième direction de vibration, ladite première armature comporte deux parois latérales en regard respectivement des deux corps d'inertie, ladite suspension élastique comporte deux cales latérales en élastomère interposées chacune entre un des corps d'inertie et une paroi latérale de la première armature, chaque cale latérale en élastomère étant disposée pour travailler en cisaillement sous l'effet des vibrations selon la première direction de vibration et en compression sous l'effet des vibrations selon la deuxième direction de vibration, et le support antivibratoire comportant deux corps de butée latéraux en élastomère interposés respectivement entre la première armature et un des corps d'inertie ;
- ladite première armature comporte deux parois latérales reliées entre elles par une paroi de couverture et le corps d'inertie est disposé entre les parois latérales de la première armature, sous la paroi de couverture ;
- ladite première armature comporte deux parois latérales reliées entre elles par une paroi de couverture, le corps d'inertie comporte deux ailes qui sont perpendiculaires à la deuxième direction de vibration et qui sont reliées entre elles par une âme, les ailes du corps d'inertie encadrant la première armature selon la deuxième direction de vibration et l'âme du corps d'inertie recouvrant la paroi de couverture de la première armature ;
- le support antivibratoire comporte en outre une cale supérieure en élastomère qui relie l'âme du corps d'inertie et la paroi de couverture de la première armature et qui est disposée pour travailler en cisaillement sous l'effet des vibrations selon la deuxième direction de vibration et en compression sous l'effet des vibrations selon la première direction de vibration ;
- le support antivibratoire comporte en outre un corps de butée supérieur en élastomère interposé entre ladite deuxième armature et la paroi de couverture de la première armature ;
- lesdits deux corps de butée latéraux en élastomère sont formés d'une seule pièce avec les cales latérales en élastomère de la suspension élastique et surmoulés sur la deuxième armature en traversant respectivement des évidements ménagés dans les parois latérales de la deuxième armature, et lesdits deux corps de butée latéraux en élastomère étant conformés et disposés pour solliciter les ailes du corps d'inertie lorsque la deuxième armature bute contre lesdits deux corps de butée latéraux en élastomère selon la deuxième direction de vibration.

Par ailleurs, l'invention a également pour objet un véhicule comportant une caisse, un bloc motopropulseur et au moins un support antivibratoire tel que défini ci-dessus reliant la caisse au bloc motopropulseur, le corps principal en élastomère supportant le poids du bloc motopropulseur selon la première direction de vibration, qui est verticale.

Le bloc motopropulseur peut comporter au moins un moteur électrique.

### Brève description des dessins

D'autres caractéristiques et avantages du support antivibratoire apparaîtront au cours de la description suivante de cinq de ses formes de réalisation, données à titre d'exemples non limitatifs, en regard des dessins joints.

Sur les dessins :
[Fig. 1] La figure 1 est un schéma de principe montrant un véhicule dont le bloc motopropulseur peut être supporté notamment par un ou des supports antivibratoires selon la présente description.
[Fig. 2] La figure 2 est une vue en perspective d'un support antivibratoire selon une première forme de réalisation.
[Fig. 3] La figure 3 est une vue en coupe verticale du support antivibratoire de la figure 2, sans la console de fixation au bloc motopropulseur.

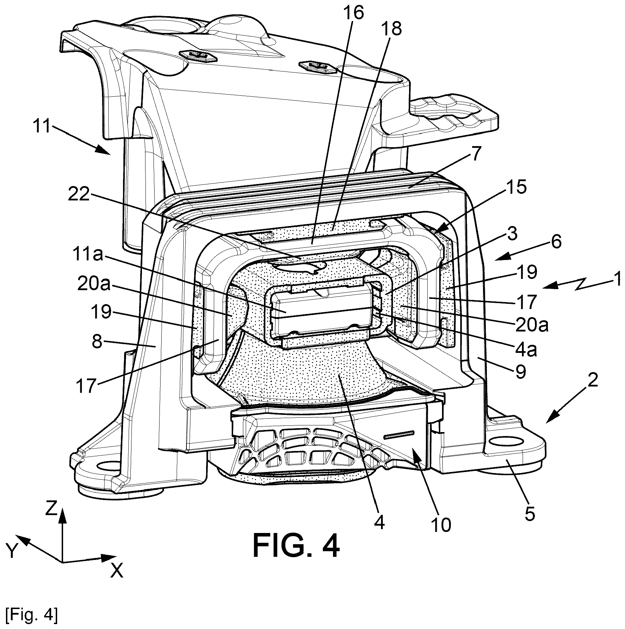

[Fig. 4] La figure 4 est une vue similaire à la figure 2, dans une deuxième forme de réalisation.

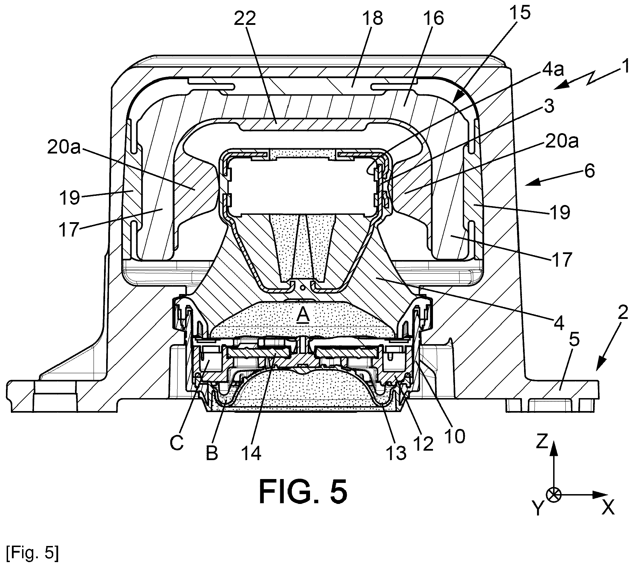

[Fig. 5] La figure 5 est une vue en coupe verticale du support antivibratoire de la figure 4, sans la console de fixation au bloc motopropulseur.
[Fig. 6] La figure 6 est une vue similaire à la figure 2, dans une troisième forme de réalisation.
[Fig. 7] La figure 7 est une vue partielle éclatée du support antivibratoire de la figure 6, sans la console de fixation au bloc motopropulseur.
[Fig. 8] La figure 8 est une vue partielle éclatée du support antivibratoire de la figure 7, montant uniquement la première armature et le corps d'inertie.
[Fig. 9] La figure 9 est une vue en coupe verticale du support antivibratoire de la figure 6, sans la console de fixation au bloc motopropulseur.
[Fig. 10] La figure 10 est une vue similaire à la figure 2, dans une quatrième forme de réalisation.
[Fig. 11] La figure 11 est une vue en coupe verticale du support antivibratoire de la figure 10, sans la console de fixation au bloc motopropulseur.
[Fig. 12] La figure 12 est une vue similaire à la figure 2, dans une cinquième forme de réalisation.
[Fig. 13] La figure 13 est une vue similaire à la figure 12, vue de troisquarts arrière.
[Fig. 14] La figure 14 est une vue en coupe verticale du support antivibratoire de la figure 12, sans la console de fixation au bloc motopropulseur.
[Fig. 15] La figure 15 est un graphe montrant la courbe de raideur dynamique selon l'axe X, avec et sans le corps d'inertie dans la cinquième forme de réalisation.

### Description plus détaillée

Sur les différentes figures, les mêmes références désignent des éléments identiques ou similaires.

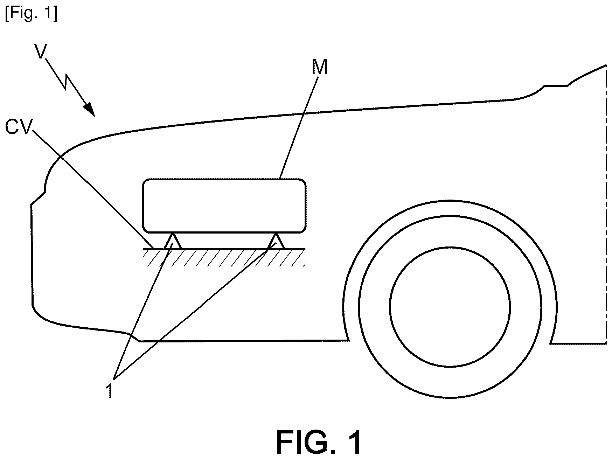

La figure 1 montre très schématiquement un véhicule V, notamment un véhicule automobile, comportant une caisse CV (ou un châssis) et un bloc motopropulseur M relié à la caisse CV par un ou plusieurs supports antivibratoires 1, dont au moins un correspond à la présente description.

Le bloc motopropulseur peut notamment être un bloc moteur hybride comprenant un moteur à combustion interne et un moteur électrique utilisés pour la propulsion du véhicule. Eventuellement, le bloc motopropulseur peut comporter uniquement un moteur électrique. Dans les deux cas, le fonctionnement du moteur électrique génère des vibrations de relativement haute fréquence, typiquement supérieures à 600 Hz.

Le support antivibratoire 1 va maintenant être décrit, dans cinq formes de réalisation. La première forme de réalisation sera décrite en détail, et les autres formes de réalisation seront décrites plus succinctement en mettant en évidence les différences entre elles. Toutes les caractéristiques et avantages expliqués pour une des formes de réalisation valent pour les autres, tant que ces caractéristiques et avantages ne sont pas en contradictions avec les caractéristiques et avantages d'une autre forme de réalisation.

### Première forme de réalisation

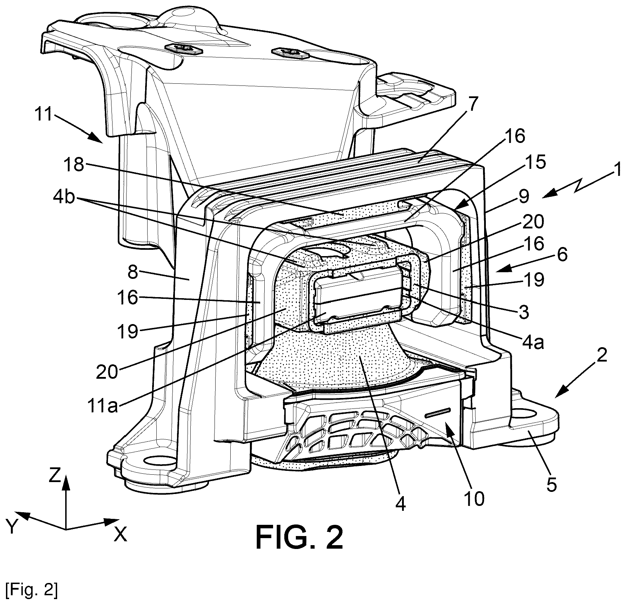

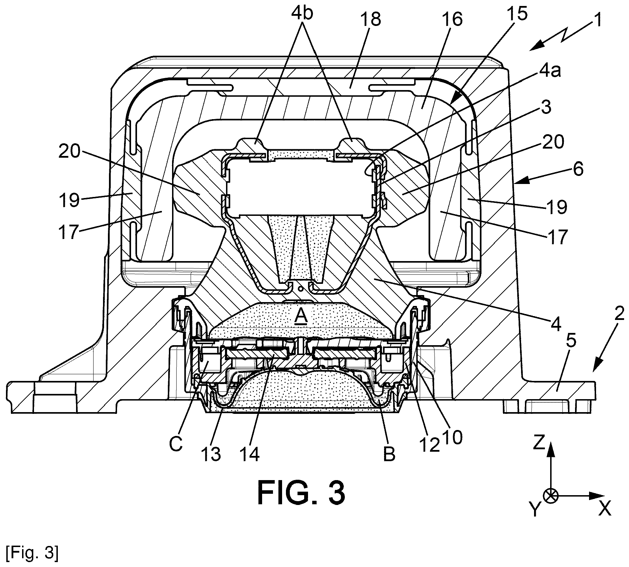

Dans la première forme de réalisation, représentée sur les figures 2 et 3, le support antivibratoire 1 comporte une première armature 2 rigide, adaptée pour être fixée à un premier élément, notamment choisi parmi la caisse CV et le bloc motopropulseur M. Par exemple, la première armature 2 peut être fixée à la caisse CV du véhicule. La première armature 2 peut notamment être réalisée en métal, par exemple en alliage léger.

La première armature 2 peut former par exemple un arceau 6, comprenant notamment une paroi de couverture sensiblement horizontale (s'étendant selon les axes X, Y) et deux parois latérales 8, 9 sensiblement verticales (s'étendant selon les axes Y, Z). Chacune des parois latérales 8, 9 peut comporter une embase 5 adaptée pour être fixée à la caisse CV du véhicule, notamment par vissage.

Le support antivibratoire 1 comporte en outre une deuxième armature 3 adaptée pour être fixée à un deuxième élément, notamment choisi parmi la caisse CV et le bloc motopropulseur M. Par exemple, la première armature 2 peut être fixée au le bloc motopropulseur M du véhicule, notamment par l'intermédiaire d'une console 11. La deuxième armature 3 peut notamment être réalisée en métal, par exemple en tôle d'acier.

Le support antivibratoire 1 comporte en outre un corps principal 4 en élastomère reliant la première armature 2 et la deuxième armature 3.

Le corps principal 4 en élastomère permet des débattements relatifs de la deuxième armature 3 par rapport à la première armature 2 au moins selon une première direction de vibration correspondant à l'axe vertical Z et selon une deuxième direction de vibration perpendiculaire à la première direction de vibration, la deuxième direction de vibration correspondant à l'axe horizontal X.

Le corps principal 4 en élastomère est également adapté pour supporter le poids du bloc motopropulseur M selon l'axe Z.

Le corps principal 4 en élastomère peut présenter par exemple une forme extérieure de cône ayant un sommet surmoulé sur la deuxième armature 3 et une base élargie surmoulée sur une embase rigide 10.

Le sommet du corps principal 4 en élastomère et la deuxième armature 3 peuvent par exemple délimiter un passage 4a traversant ou non, ouvert selon l'axe Y, dans lequel est engagé un bras 11a de la console 11.

L'embase rigide 10 peut être solidarisée avec la première armature 2, par exemple par emboîtement et clipsage selon l'axe Y, comme expliqué dans le document WO2008152284A1 susmentionné.

Le support antivibratoire 1 peut être hydraulique. Notamment, de façon connue en soi, le corps principal 4 en élastomère peut être creux et délimiter avec l'embase rigide 10 une chambre de travail A communiquant avec une chambre de compensation B par l'intermédiaire d'un passage étranglé C, les chambres A, B et le passage étranglé C étant remplis de liquide. L'embase rigide 10 peut former une cloison 11 qui sépare les chambres A et B et qui délimite le passage étranglé C. La chambre de compensation B peut être délimitée entre l'embase rigide 10 et un soufflet 13 souple surmoulé sur une partie inférieure de l'embase rigide 10. Le passage étranglé peut présenter une fréquence de résonance comprise par exemple entre 5 et 20 Hz. Ces dispositions permettent d'amortir les mouvements vibratoires de faible fréquence (par exemple moins de 20Hz) et de relativement grande amplitude du bloc motopropulseur M selon l'axe Z, dus notamment au roulage du véhicule.

La cloison 11 peut comporter un clapet de découplage 14, également connu en soi, pour filtrer les mouvements vibratoires de plus haute fréquence (par exemple à partir de 20Hz) et de relativement faible amplitude du bloc motopropulseur M selon l'axe Z, dus notamment au fonctionnement du moteur à combustion interne du bloc motopropulseur M.

Le support antivibratoire 1 comporte en outre un corps d'inertie 15, ou éventuellement plusieurs corps d'inertie 15. Le corps d'inertie 15 peut être métallique, notamment en alliage léger.

Le corps d'inertie 15 est relié à la première armature 2 par une suspension élastique 19 interposée entre ledit corps d'inertie 15 et ladite première armature 2 selon l'axe X.

Le corps d'inertie 15 peut présenter une forme générale en U inversé, avec deux ailes 17 qui s'étendent selon les axes Y, Z et une âme 16 qui relie les deux ailes 17 et s'étend selon les axes X, Y. Les ailes 17 peuvent être disposées chacune entre la deuxième armature 3 et une des parois latérales 8, 9 de la première armature 2, tandis que l'âme 16 peut être situé sous la paroi de couverture 7 de la première armature 2.

La suspension élastique 19 peut comporter deux cales latérales en élastomère interposées chacune entre une des ailes 17 du corps d'inertie et une paroi latérale 8, 9 de la première armature 2. Chacune de ces cales latérales en élastomère peut être par exemple surmoulée et adhérisée sur la face externe de l'aile 17 correspondante et sur la face interne de la paroi latérale 8, 9 correspondante.

Chaque cale latérale en élastomère peut être disposée pour travailler en cisaillement sous l'effet des vibrations du bloc motopropulseur M selon l'axe Z et en compression sous l'effet des vibrations selon l'axe X.

Le corps d'inertie 15 et la suspension élastique 19 sont dimensionnés pour que ledit corps d'inertie ait une fréquence propre inférieure à 800 Hz (par exemple comprise entre 200 et 700 Hz, notamment de l'ordre de 400 Hz) pour les vibrations selon l'axe X, et de préférence également pour les vibrations selon l'axe Z.

Le support antivibratoire peut comporter en outre une cale supérieure 18 en élastomère qui relie l'âme 17 du corps d'inertie et la paroi de couverture 7 de la première armature 2. La cale supérieure 18 en élastomère peut être par exemple surmoulée et adhérisée sur la face inférieure de la paroi de couverture 7 et sur la face supérieure de l'âme 17.

La cale supérieure 18 en élastomère est disposée pour travailler en cisaillement sous l'effet des vibrations du bloc motopropulseur M selon l'axe X et en compression sous l'effet des vibrations selon l'axe Z.

Le support antivibratoire 1 comporte en outre au moins un corps de butée latéral 20 en élastomère interposé entre la deuxième armature 3 et le corps d'inertie 15 pour limiter les débattements relatifs de la deuxième armature 3 par rapport à la première armature 2 selon l'axe X.

Notamment, le support antivibratoire 1 peut comporter deux corps de butée latéraux 20 en élastomère interposés respectivement entre une des parois latérales 8, 9 de la première armature et une des ailes 17 du corps d'inertie.

Ces corps de butée latéraux 20 peuvent être solidaires de la deuxième armature 3 ; ils peuvent notamment être moulés d'une pièce avec le corps principale 4 en élastomère.

Le support antivibratoire 1 peut comporter en outre au moins un corps de butée supérieur 4b en élastomère (deux dans l'exemple représenté), interposé entre la deuxième armature 3 et l'âme 16 du corps d'inertie, pour limiter les débattements de la deuxième armature 3 selon l'axe Z.

Le corps de butée supérieur 4b en élastomère peut être solidaire de la deuxième armature. Le corps de butée supérieur 4b en élastomère peut être moulé d'une pièce avec le corps principal 4 en élastomère.

Grâce au corps d'inertie 15, à ces dispositions, on assure un filtrage des vibrations de haute fréquence provenant du bloc motopropulseur M, notamment des vibrations de fréquence supérieure à 600 Hz. De telles vibrations peuvent notamment provenir du fonctionnement du moteur électrique appartenant au bloc motopropulseur M. Ce filtrage est effectif notamment vis-à-vis des vibrations orientées selon l'axe X. ce qui est d'autant plus important lorsque la deuxième armature 3 est en appui contre une des ailes 17 du corps d'inertie par l'intermédiaire d'un des corps de butée latéraux 20 en élastomère, par exemple lorsque le bloc motopropulseur M exerce un couple important (c'est le cas notamment lorsque le support antivibratoire 1 appartient à une suspension pendulaire du bloc motopropulseur M.

Cet effet est atteint sans augmenter l'encombrement plus important du support antivibratoire et sans dégrader son endurance (la suspension élastique 19 et la cale supérieure 18 en élastomère travaillent soit en compression, soit en cisaillement mais avec une amplitude limitée par la disposition d'ensemble des pièces du support antivibratoire 1).

### Deuxième forme de réalisation

La deuxième forme de réalisation, représentée sur les figures ' et 5, se distingue uniquement de la première forme de réalisation par le fait que :
- les corps de butée latéraux 20a en élastomère sont solidaires du corps d'inertie 15 au lieu d'être solidaires de la deuxième armature 3,
- le corps de butée supérieur 18 en élastomère est solidaire du corps d'inertie 15 au lieu d'être solidaire de la deuxième armature 3.

Par exemple, les corps de butée latéraux 20a en élastomère et le corps de butée supérieur 22 en élastomère peuvent être surmoulés d'une pièce sur les faces intérieures de l'âme 16 et des ailes 17 du corps d'inertie 15.

### Troisième forme de réalisation

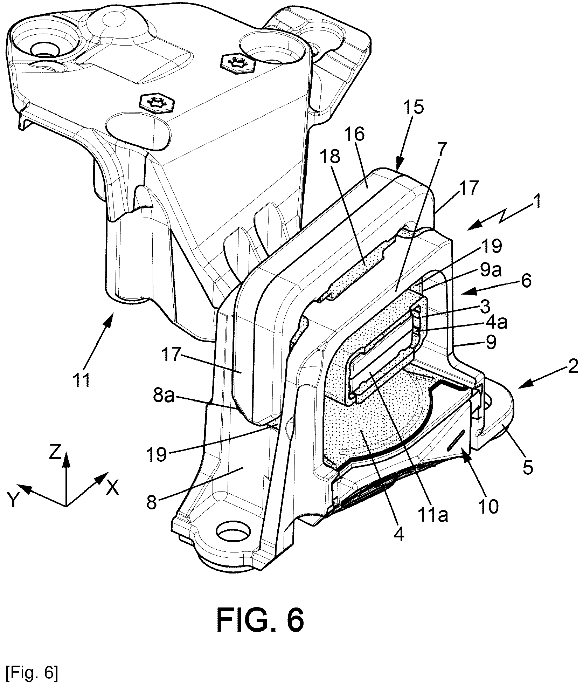

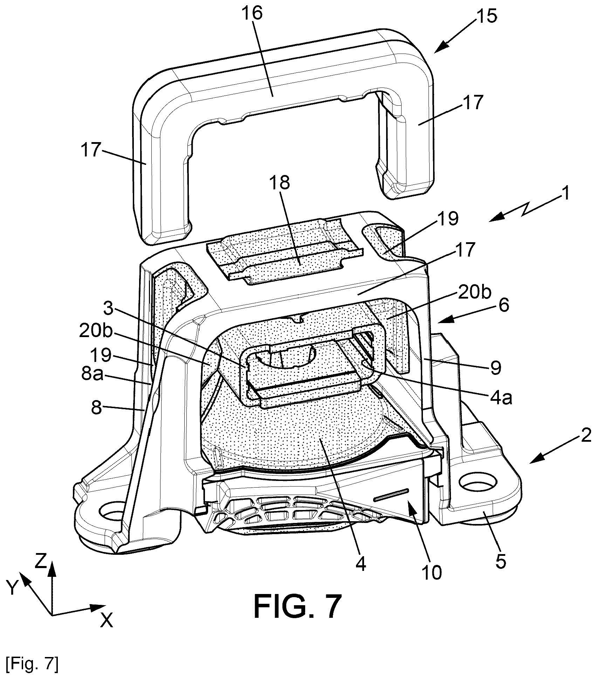

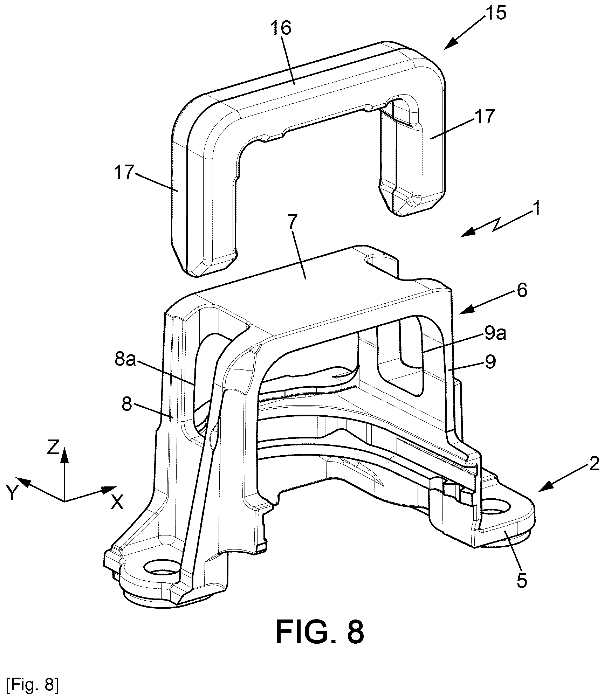

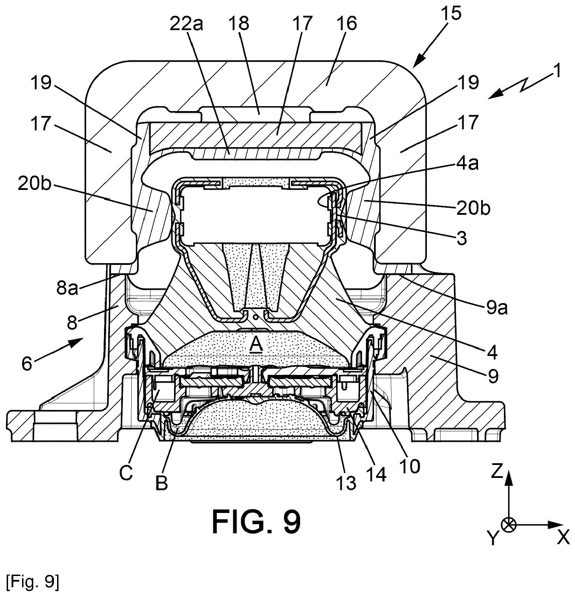

La troisième forme de réalisation, visible sur les figures 6 à 9, se distingue de la deuxième forme de réalisation par le fait que le corps d'inertie 15 est à l'extérieur de la première armature 2 au lieu d'être à l'intérieur.

En particulier, les ailes 17 du corps d'inertie encadrent la première armature 2 selon l'axe X et l'âme 16 du corps d'inertie recouvre la paroi de couverture 7 de la première armature.

La cale supérieure 18 en élastomère peut être par exemple surmoulée et adhérisée sur la face supérieure de la paroi de couverture 7 et sur la face inférieure de l'âme 17.

Les corps de butée latéraux 20b sont solidaires des parois latérales 8, 9 de la première armature 2 et des ailes 17 du corps d'inertie. La deuxième armature 3 et le sommet du corps principal 4 en élastomère sont adaptés pour buter contre les corps de butée 20b pour limiter les débattements de la deuxième armature 3 selon l'axe X.

Les cales latérales de le suspension élastique 19 peuvent être moulées d'une pièce avec les corps de butée latéraux 20b, l'élastomère de la cale latérale et du corps de butée latéral 20b d'un même côté du support antivibratoire traversant par exemple un évidement 8a, 9a ménagé dans la paroi latérale correspondante 8, 9 de la première armature.

Les deux corps de butée latéraux 20b en élastomère sont conformés et disposés pour solliciter les ailes 17 du corps d'inertie (à travers les évidements 8a, 9a) lorsque la deuxième armature 3 bute contre les corps de butée latéraux 20b en élastomère selon la deuxième direction de vibration X

Le corps de butée supérieur 18 en élastomère peut être solidaire de la paroi de couverture 7 de la deuxième armature. En particulier, le corps de butée supérieur 18 en élastomère peut être surmoulé et adhérisé sur la face inférieure de la paroi de couverture 7.

### Quatrième forme de réalisation

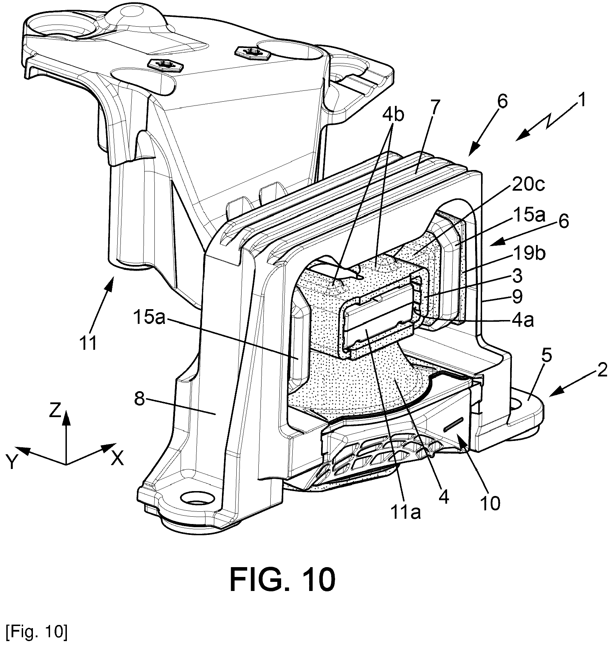

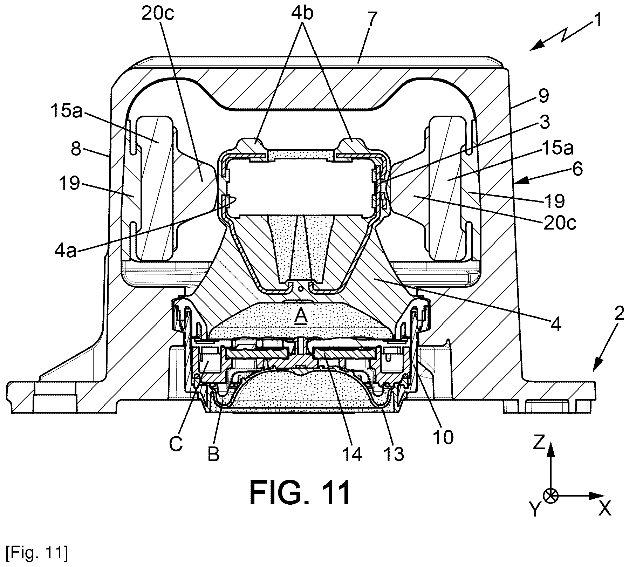

La quatrième forme de réalisation, représentée sur les figures 10 et 11, se distingue de la deuxième forme de réalisation par le fait que le support antivibratoire 1 comporte deux corps d'inertie 15a séparés, qui correspondent sensiblement aux deux ailes 17 du corps d'inertie 15 de la figure 2 mais ne sont pas reliés entre eux par une âme.

Les cales latérales en élastomère de la suspension 19 sont surmoulées et adhérisées respectivement sur la face extérieure du corps d'inertie 15a correspondant et sur la face intérieure de la paroi latérale correspondante 8, 9 de la deuxième armature.

Les corps de butée latéraux 20c en élastomère sont surmoulés et adhérisés respectivement sur les faces intérieures des corps d'inertie 15a.

Le ou les corps de butée supérieurs 4b en élastomère sont similaires à ceux de la première forme de réalisation et sont adaptés pour buter contre la face inférieure de la paroi de couverture 7 de la première armature 2.

### Cinquième forme de réalisation

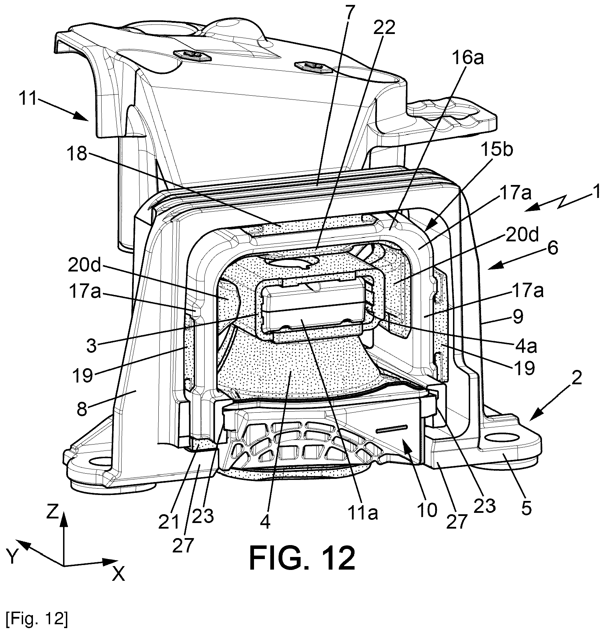

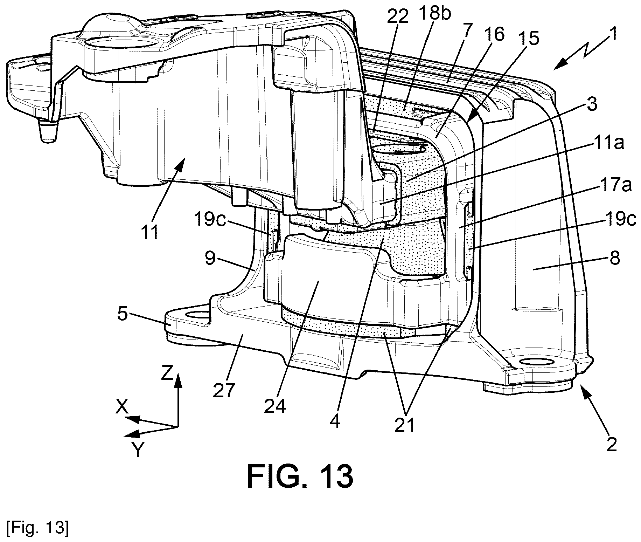

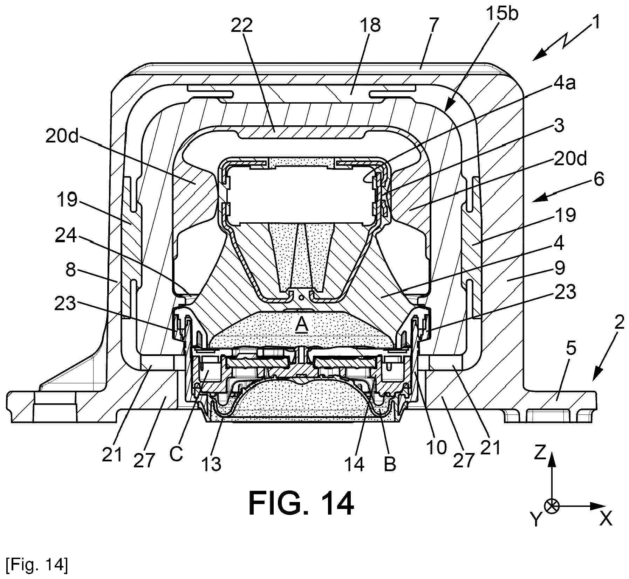

La cinquième forme de réalisation, représentée sur les figures 12 à 14, se distingue de la deuxième forme de réalisation par le fait que l'embase rigide 10 n'est pas fixée rigidement à la première armature.

Dans cette forme de réalisation, l'embase rigide 10 est reliée à la première armature par l'intermédiaire du corps d'inertie 15 auquel l'embase 10 est fixée rigidement.

La fixation de l'embase rigide 10 au corps d'inertie 15 peut être réalisée par tout moyen connu. Par exemple, l'embase rigide 10 peut être fixée au corps d'inertie 15 par emboîtement et clipsage selon l'axe Y, de façon similaire à la fixation de l'embase rigide 10 sur la première armature 2 dans les quatre premières formes de réalisation, c'est-à-dire comme décrit dans le document WO2008152284A1 susmentionné ou de façon similaire. A cet effet, l'embase rigide 10 peut s'emboîter selon l'axe Y dans deux rainures latérales internes 23 ménagées vers l'extrémité inférieure des faces intérieures des ailes 17 du corps d'inertie 15, jusqu'en butée contre une paroi arrière 24 reliant lesdites ailes 17.

Des cales inférieures 21 en élastomères peuvent être interposées entre l'extrémité inférieure du corps d'inertie 15 et une paroi inférieure horizontale 27 de la première armature, pour reprendre verticalement le poids du bloc motopropulseur M.

### Effet de l'invention

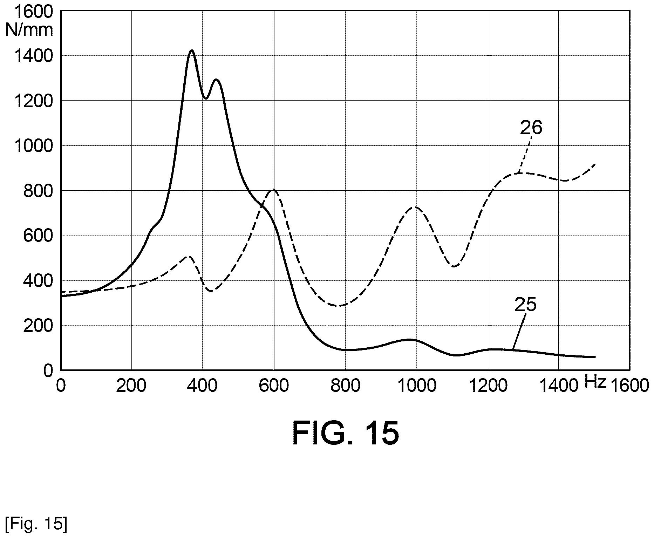

La figure 15 représente la courbe de raideur dynamique 25 du support antivibratoire de la cinquième forme de réalisation selon l'axe X, comparée à la courbe de raideur dynamique 26 d'un support antivibratoire similaire sans corps d'inertie 15 (c'est-à-dire un support antivibratoire similaire à celui de la deuxième forme de réalisation où les corps de butée 20 seraient solidaires des parois latérales 8, 9 de la première armature 2).

Cette figure montre que la raideur dynamique du support selon la présente description diminue nettement à partir de 600 Hz, ce qui permet l'effet de filtrage des vibrations de haute fréquence selon l'axe X comme exposé précédemment, ce que ne permettaient pas les dispositifs comparables de l'art antérieur. Le support antivibratoire selon la présente description permet également le filtrage des vibrations de haute fréquence selon l'axe Z, de façon au moins aussi efficace que dans l'art antérieur.

## Revendications

1. Support antivibratoire (1) adapté pour filtrer et amortir des vibrations entre un premier élément (CV) et un deuxième élément (M), ledit support antivibratoire (1) comportant :
- une première armature (2) adaptée pour être fixée au premier élément (CV),
- une deuxième armature (3) adaptée pour être fixée au deuxième élément (M),
- un corps principal (4) en élastomère reliant la première armature (2) et la deuxième armature (3), le corps principal (4) en élastomère permettant des débattements relatifs de la deuxième armature (3) par rapport à la première armature (2) au moins selon une première direction de vibration (Z) et selon une deuxième direction de vibration (X) perpendiculaire à la première direction de vibration, le corps principal (4) en élastomère étant également adapté pour supporter un poids du deuxième élément (M) selon la première direction de vibration (Z), le premier élément étant une caisse ou un châssis (CV) de véhicule et le deuxième élément étant un bloc motopropulseur (M) du véhicule,
- au moins un corps d'inertie (15 ; 15a) relié à la première armature (2) par une suspension élastique (19) interposée entre ledit corps d'inertie (15 ; 15a) et ladite première armature (2) selon la deuxième direction de vibration (X),
- au moins un corps de butée latéral (20 ; 20a ; 20b ; 20c ; 20d) en élastomère adapté pour limiter les débattements relatifs de la deuxième armature (3) par rapport à la première armature (2) selon la deuxième direction de vibration (X), dans lequel le corps d'inertie (15 ; 15a) a une fréquence propre inférieure à 800 Hz pour les vibrations selon la deuxième direction de vibration (X).

2. Support antivibratoire (1) selon la revendication 1, dans lequel ledit corps principal (4) en élastomère présente une forme extérieure de cône ayant un sommet surmoulé sur la deuxième armature (3) et une base élargie surmoulée sur une embase rigide (10) qui est fixée rigidement soit à la première armature (2), soit au corps d'inertie (15 ; 15a).

3. Support antivibratoire (1) selon la revendication 1 ou la revendication 2, dans lequel ledit corps d'inertie (15 ; 15a) a une fréquence propre comprise entre 200 et 700 Hz selon la deuxième direction de vibration (X).

4. Support antivibratoire (1) selon l'une quelconque des revendications précédentes , dans lequel ledit corps d'inertie (15 ; 15a) est en métal.

5. Support antivibratoire (1) selon l'une quelconque des revendications précédentes, dans lequel ledit corps de butée latéral (20 ; 20a ; 20b ; 20c ; 20d) est solidaire soit de la deuxième armature (3), soit au moins du corps d'inertie (15 ; 15a).

6. Support antivibratoire (1) selon l'une quelconque des revendications précédentes, dans lequel ladite suspension élastique (19) comporte une cale latérale en élastomère fixée audit corps d'inertie (15 ; 15a) et à ladite première armature (2), cette cale latérale en élastomère étant disposée pour travailler en cisaillement sous l'effet des vibrations selon la première direction de vibration (Z) et en compression sous l'effet des vibrations selon la deuxième direction de vibration (X).

7. Support antivibratoire (1) selon l'une quelconque des revendications précédentes, dans lequel ledit corps d'inertie (15) comporte deux ailes (17) qui sont perpendiculaires à la deuxième direction de vibration (X) et qui sont reliées entre elles par une âme (16), ladite première armature (2) comporte deux parois latérales (8, 9) en regard respectivement des deux ailes (17) du corps d'inertie, ladite suspension élastique (19) comporte deux cales latérales en élastomère interposées chacune entre une des ailes (17) du corps d'inertie et une paroi latérale (8, 9) de la première armature, chaque cale latérale en élastomère étant disposée pour travailler en cisaillement sous l'effet des vibrations selon la première direction de vibration (Z) et en compression sous l'effet des vibrations selon la deuxième direction de vibration (X), et le support antivibratoire comportant deux corps de butée latéraux (20 ; 20a ; 20b ; 20d) en élastomère adaptés pour limiter les débattements de la deuxième armature (3) dans deux sens opposés par butée contre les ailes du corps d'inertie selon la deuxième direction de vibration (X).

8. Support antivibratoire (1) selon la revendication 7, dans lequel ladite âme (16) du corps d'inertie s'étend sensiblement perpendiculairement à la première direction de vibration (Z) en recouvrant le corps principal (4) en élastomère et la deuxième armature (3), la première armature (2) comporte en outre une paroi de couverture (7) recouvrant ladite âme (16), et le support antivibratoire comportant en outre une cale supérieure (18) en élastomère qui relie l'âme (17) du corps d'inertie et la paroi de couverture (7) de la première armature et qui est disposée pour travailler en cisaillement sous l'effet des vibrations selon la deuxième direction de vibration (X) et en compression sous l'effet des vibrations selon la première direction de vibration (Z), un corps de butée supérieur (4b, 22) en élastomère étant interposé entre ladite deuxième armature (3) et l'âme (16) du corps d'inertie, et lesdits deux corps de butée latéraux (20 ; 20a ; 20d) en élastomère étant interposés respectivement entre la deuxième armature (3) et une des ailes (17) du corps d'inertie.

9. Support antivibratoire (1) selon l'une quelconque des revendications 1 à 6, comportant deux corps d'inertie (15a) qui sont perpendiculaires à la deuxième direction de vibration (X), ladite première armature (2) comporte deux parois latérales (8, 9) en regard respectivement des deux corps d'inertie (15a), ladite suspension élastique (19) comporte deux cales latérales en élastomère interposées chacune entre un des corps d'inertie (15a) et une paroi latérale (8, 9) de la première armature, chaque cale latérale en élastomère étant disposée pour travailler en cisaillement sous l'effet des vibrations selon la première direction de vibration (Z) et en compression sous l'effet des vibrations selon la deuxième direction de vibration (X), et le support antivibratoire comportant deux corps de butée latéraux (20c) en élastomère interposés respectivement entre la première armature (3) et un des corps d'inertie (15a).

10. Support antivibratoire (1) selon l'une quelconque des revendications 1 à 6, dans lequel ladite première armature (2) comporte deux parois latérales (8, 9) reliées entre elles par une paroi de couverture (7), le corps d'inertie (15) comporte deux ailes (17) qui sont perpendiculaires à la deuxième direction de vibration (X) et qui sont reliées entre elles par une âme (16), les ailes (17) du corps d'inertie encadrant la première armature (2) selon la deuxième direction de vibration (X) et l'âme (16) du corps d'inertie recouvrant la paroi de couverture (7) de la première armature (2).

11. Support antivibratoire (1) selon la revendication 10, dans lequel lesdits deux corps de butée latéraux (20b) en élastomère sont formés d'une seule pièce avec les cales latérales en élastomère de la suspension élastique (19) et surmoulés sur la deuxième armature en traversant respectivement des évidements (8a, 9a) ménagés dans les parois latérales (8, 9) de la deuxième armature, et lesdits deux corps de butée latéraux (20b) en élastomère étant conformés et disposés pour solliciter les ailes (17) du corps d'inertie lorsque la deuxième armature (3) bute contre lesdits deux corps de butée latéraux (20b) en élastomère selon la deuxième direction de vibration (X).

12. Véhicule comportant une caisse (CV), un bloc motopropulseur (M) et au moins un support antivibratoire (1) selon l'une quelconque des revendications précédentes reliant la caisse (CV) au bloc motopropulseur (M), le corps principal (4) en élastomère supportant le poids du bloc motopropulseur (M) selon la première direction de vibration (Z), qui est verticale.

13. Véhicule selon la revendication 12, dans lequel le bloc motopropulseur (M) comporte au moins un moteur électrique.
